# EUROPÄISCHE PATENTANMELDUNG

(11) **EP 4 349 666 A1**
(43) Veröffentlichungstag der Anmeldung: **10.04.2024**
(21) Anmeldenummer: 23187842.2
(22) Anmeldetag: 26.07.2023
(51) Int. Cl.: B60R 22/20, B60R 22/26

(54) **GURTGESTELL FÜR EINEN FAHRZEUGSITZ**

(30) Priorität: 07.10.2022 DE 102022126000
(71) Anmelder: Aguti Produktentwicklung & Design GmbH, 88085 Langenargen (DE)
(72) Erfinder: Rogg, Christian, 88142 Wasserburg (DE)
(74) Vertreter: Otten, Roth, Dobler & Partner mbB Patentanwälte

(57) **Zusammenfassung**

Gurtgestell für einen Fahrzeugsitz, wobei das Gurtgestell ein Rückhalteelement aufweist, wobei das Rückhalteelement dazu ausgebildet ist, einen Sicherungsgurt eines Personenrückhaltesystems anzuordnen, wobei das Gurtgestell eine Vertikalstütze aufweist. Das Gurtgestell zeichnet sich dadurch aus, dass das Gurtgestell eine Verstellmechanik aufweist, um das Rückhalteelement des Personenrückhaltesystems relativ zur Vertikalstütze zu verstellen, wobei das Rückhalteelement mit der Verstellmechanik derart zusammenwirkt, dass das Rückhalteelement durch die Verstellmechanik in einer Bewegung von einer Nutzposition in eine Verstauposition und umgekehrt bewegbar ist, wobei die Verstellmechanik ein Profil aufweist, das relativ zur Vertikalstütze positionsfest vorhanden ist,'wobei die Verstellmechanik ein Ablaufelement aufweist, wobei das Profil eine Führungsbahn für das Ablaufelement aufweist, wobei das Ablaufelement mit dem Rückhalteelement gekoppelt ist, wobei in der Nutzposition des Rückhalteelements eine Bewegung des Rückhalteelements in vertikaler Richtung blockiert ist, wobei die Verstellmechanik derart vorhanden ist, dass das Ablaufelement in der Nutzposition des Rückhalteelements in einem ersten Bewegungsabschnitt in horizontaler Richtung quer zur Längsachse der Vertikalstütze bewegbar ist, um die Blockierung des Rückhalteelements in vertikaler Richtung zu lösen, wobei in einem zweiten Bewegungsabschnitt des Ablaufelements das Ablaufelement für eine Verstellung des Rückhalteelements aus der Nutzposition in eine Verstauposition in vertikaler Richtung entlang einer Längsachse der Vertikalstütze an der Führungsbahn bewegbar ist.

## Beschreibung

### Stand der Technik

Vorrichtungen zur Anordnung eines Personenrückhaltesystems in einem Verkehrsmittel sind bekannt, beispielsweise zur Anbringung einer Sicherheitsgurtanordnung zur Personensicherung und von Komponenten eines dazugehörigen Personensitzes im Verkehrsmittel. Solche Vorrichtungen werden auch als Gurtgestelle bezeichnet.

In Verkehrsmitteln, wie Fahrzeugen, beispielsweise Personenkraftwagen, Kleinbussen, Wohnmobilen oder Camping-Mobilen werden solche Vorrichtungen als eine Baueinheit für einen nach der Herstellung des Fahrzeugs nachträglichen Einbau im Fahrzeuginneren bereitgestellt. Die Vorrichtung mit dem daran vorhandenen Personenrückhaltesystem muss für im Fahrzeug auftretende maximale Belastungssituationen ausgelegt sein, die insbesondere im Zusammenhang mit Unfallszenarien im Straßenverkehr auftreten können.

Bei der Auslegung der Vorrichtung sind insbesondere Sicherheits- bzw. Stabilitätskriterien zu erfüllen, welche zum Beispiel für eine Zulassung der Vorrichtung bzw. des Fahrzeugs erforderlich sind. Um die Sicherheits- und Stabilitätskriterien zu erfüllen, ist jedoch meist eine Ausbildung der Vorrichtung notwendig, welche einer Komfortfunktionen des Personensitzes entgegenstehen. So sollen Personensitze in Wohnmobilen z.B. meist sowohl eine Fahrzeugsitzfunktion, als auch eine Liegefunktion erfüllen.

### Aufgabe und Vorteile der Erfindung

Aufgabe der vorliegenden Erfindung ist es, eine verbessertes Gurtgestell der einleitend beschriebenen Art bereitzustellen. Beispielsweise soll ein verbessertes Gurtgestell bereitgestellt werden, bei welchem technische und wirtschaftliche Verbesserungen unter Beibehaltung von Stabilitäts- und Sicherheitskriterien vorteilhaft erfüllt werden. Insbesondere soll ein verbessertes Gurtgestell bereitgestellt werden, welches eine technische und/oder wirtschaftliche Verbesserungen aufweist, um eine Komfortfunktion vergleichsweise einfacher zu realisieren.

Diese Aufgabe wird durch die unabhängigen Ansprüche gelöst.

Die abhängigen Ansprüche betreffen vorteilhafte und zweckmäßige Weiterbildungen der Erfindung.

Die Erfindung geht von einem Gurtgestell für einen Fahrzeugsitz aus, wobei im verbauten Zustand des Gurtgestells im Fahrzeugsitz das Gurtgestell eine mechanisch tragende Stützstruktur des Fahrzeugsitzes bildet, wobei das Gurtgestell ein Rückhalteelement aufweist, wobei das Rückhalteelement dazu ausgebildet ist, einen Sicherungsgurt eines Personenrückhaltesystems anzuordnen, wobei das Gurtgestell eine Vertikalstütze aufweist.

Ein Personenrückhaltesystem ist beispielsweise als eine Sicherheitsgurtanordnung, z.B. als ein Mehrpunktgurt-Sicherheitssystem oder als ein Dreipunktgurt-Sicherheitssystem ausgebildet. Beispielsweise ist am Gurtgestell eine Komponente des Personenrückhaltesystems angeordnet. Zum Beispiel sind am Gurtgestell mehrere Komponenten des Personenrückhaltesystems angeordnet. Beispielsweise ist eine derartige Komponente als das Rückhalteelement vorhanden. Zum Beispiel ist eine derartige Komponente als ein Gurtaufroller, als eine Gurtumlenkanordnung zur Richtungsänderung des daran vorbeigeführten Gurts, als eine Halterung zur Fixierung eines Gurtendes eines Gurts des Personenrückhaltesystems und/oder als ein Gurtschloss, an dem ein Einsteckteil lösbar einrastbar ist, vorhanden. Beispielsweise ist der Gurt mittels des Einsteckteils als eine Schlaufe ausziehbar vorhanden. Beispielsweise umfasst das Gurtgestell das Personenrückhaltesystem.

Beispielsweise umfasst das Personenrückhaltesystem einen Gurt, einen Gurtaufroller, eine Gurtschließe, ein Gurtschloß und das Rückhalteelement. Zum Beispiel ist das Personenrückhaltesystem als ein 3-Punkt-Gurtsystem ausgebildet. Zum Beispiel ist der Gurt als ein Sicherungsgurt vorhanden.

Beispielsweise muss das vorgeschlagene Gurtgestell konstruktiv bzw. mechanisch so ausgelegt sein, um einer maximal tolerierbaren bzw. möglichen Belastung, insbesondere bei dynamischen Belastungsvorgängen, einen ausreichenden Widerstand entgegensetzen zu können, also entsprechende Kräfte und Momente aufzunehmen und weitergeben zu können. Beispielsweise muss das vorgeschlagenen Gurtgestell die vorhandenen Normen zur Typengenehmigung in Fahrzeugen erfüllen. Zum Beispiel muss das Gurtgestell die Verordnung (EG) 661/2009 des Europäischen Parlaments und des Rates und deren Änderungsnormen, die Verordnung (EU) 407/2011 des Europäischen Parlaments und des Rates der Europäischen Union und/oder die Regelung Nr. 14 der Wirtschaftskommission der Vereinten Nationen für Europa (UN/ECE) erfüllen.

Im eingebauten Zustand des Gurtgestells im Fahrzeug entspricht die relevante Belastungsrichtung in der Regel einer Sitzrichtung der gesicherten Person, beispielsweise der Fahrtrichtung des Fahrzeugs. Bei einem Fahrzeug tritt eine maximale Belastung z.B. bei einem Aufprall des fahrenden Fahrzeugs gegen ein Hindernis auf, einem Crashfall. Aufgrund der abgebremsten Masse der im Fahrzeug sitzenden und gesicherten Person wird über den Sicherheitsgurt des Personenrückhaltesystems eine ruckartig wirkende Zugkraft bzw. ein daraus resultierendes Moment in der Belastungsrichtung bzw. in Fahrtrichtung an der Stützstruktur wirksam.

Beispielsweise ist die Fahrtrichtung des Fahrzeugs in eine Sitzrichtung oder Blickrichtung eines Fahrers des Fahrzeugs zur Fahrzeugfront des Fahrzeugs zu sehen. Zum Beispiel ist die Fahrtrichtung des Fahrzeugs eine Fahrtrichtung des Fahrzeugs in Vorwärtsrichtung. Zum Beispiel wird die Fahrebene des Fahrzeugs durch eine Straße gebildet, auf welcher das Fahrzeug fährt. Beispielsweise erstreckt sich die Fahrtrichtung des Fahrzeugs in einer Richtung von einem Fahrzeugheck des Fahrzeugs zur Fahrzeugfront des Fahrzeugs.

Zum Beispiel ist das Fahrzeug als ein Automobil, als ein Autobus, als ein Lastkraftwagen (LKW), als ein Caravan, als ein Wohnmobil oder auch als ein Camping-Mobil ausgebildet.

Der Kern der Erfindung ist nun darin zu sehen, dass das Gurtgestell eine Verstellmechanik aufweist, um das Rückhalteelement des Personenrückhaltesystems relativ zur Vertikalstütze zu verstellen, wobei das Rückhalteelement mit der Verstellmechanik derart zusammenwirkt, dass das Rückhalteelement durch die Verstellmechanik in einer Bewegung von einer Nutzposition in eine Verstauposition und umgekehrt bewegbar ist, wobei die Verstellmechanik ein Profil aufweist, wobei das Profil relativ zur Vertikalstütze positionsfest vorhanden ist, wobei die Verstellmechanik ein Ablaufelement aufweist, wobei das Profil eine Führungsbahn für das Ablaufelement aufweist, wobei das Ablaufelement mit dem Rückhalteelement gekoppelt ist, wobei in der Nutzposition des Rückhalteelements eine Bewegung des Rückhalteelements in vertikaler Richtung blockiert ist, wobei die Verstellmechanik derart vorhanden ist, dass das Ablaufelement in der Nutzposition des Rückhalteelements in einem ersten Bewegungsabschnitt in horizontaler Richtung quer zur Längsachse der Vertikalstütze bewegbar ist, um die Blockierung des Rückhalteelements in vertikaler Richtung zu lösen, wobei in einem zweiten Bewegungsabschnitt des Ablaufelements das Ablaufelement für eine Verstellung des Rückhalteelements aus der Nutzposition in eine Verstauposition in vertikaler Richtung entlang einer Längsachse der Vertikalstütze an der Führungsbahn bewegbar ist. Hierdurch ist eine Komfortfunktion des Gurtgestells verbessert. Beispielsweise ist hierdurch ein Fahrzeugsitz realisierbar, bei welchem das Personenrückhaltesystem vergleichsweise einfach umbaubar ist. Hierdurch ist die Komfortfunktion des Fahrzeugsitzes verbessert.

Zum Beispiel ist die Vertikalstütze einstückig ausgebildet. Denkbar ist, dass die Vertikalstütze als ein Vierkantrohr vorhanden ist. Beispielweise ist die Vertikalstütze aus Metall ausgebildet. Beispielsweise verläuft die Vertikalstütze vom ersten Ende zum zweiten Ende durchgehend geradlinig. Beispielsweise verläuft die Längsachse der Vertikalstütze vom ersten Ende zum zweiten Ende der Vertikalstütze.

Beispielsweise erstreckt sich die Vertikalstütze entlang der Längsachse vom ersten Ende bis zum zweiten Ende über eine Länge größer 0,4m, größer 0,5m, größer 0,6m, größer 0,7m, größer 0,8m oder größer 0,9m. Zum Beispiel erstreckt sich die Vertikalstütze entlang der Längsachse vom ersten Ende bis zum zweiten Ende über eine Länge von bis zu 1,7m, bis zu 1,8m, bis zu 1,9m oder bis zu 2m. Vorstellbar ist, dass die Vertikalstütze entlang der Längsachse vom ersten Ende bis zum zweiten Ende eine Länge zwischen 0,4m und 2m, zwischen 0,4m und 1,7m oder zwischen 0,5m und 1,7m aufweist.

Beispielsweise umfasst das Gurtgestell eine einzige Vertikalstütze. Hierdurch ist das Gurtgestell vergleichsweise kostengünstig ausbildbar oder vergleichsweise einfach herstellbar. Denkbar ist aber auch, dass das Gurtgestell genau zwei Vertikalstützen aufweist. Vorstellbar ist, dass die genau zwei Vertikalstützen in einer Richtung quer zu den Längsachsen der Vertikalstützen voneinander beabstandet vorhanden sind. Zum Beispiel sind die genau zwei Vertikalstützen entlang ihrer Längsachsen miteinander verbunden, z.B. unmittelbar miteinander verbunden. Beispielsweise sind die Längsachsen der beiden Vertikalstützen zueinander parallel ausgerichtet vorhanden.

Beispielsweise erstreckt sich die Vertikalstütze entlang einer Längsachse der Vertikalstütze in eine Höhenrichtung des Gurtgestells, wobei die Längsachse der Vertikalstütze im angeordneten Zustand des Gurtgestells vertikal ausgerichtet ist. Zum Beispiel ist die Vertikalstütze senkrecht aufragend vom Fahrzeugboden auf einem Fahrzeugboden anordenbar. Zum Beispiel ist die Vertikalstütze im Bereich des ersten Endes der Vertikalstütze mit dem Fahrzeug verbindbar. Zum Beispiel ist die Vertikalstütze im Bereich des Fahrzeugbodens mittels eines Anbringelements des Gurtgestells am Fahrzeug anordenbar. Z.B. ist das Gurtgestell durch das Anbringelement mit einer Fahrzeugstruktur des Fahrzeugs verbindbar. Beispielsweise die Vertikalstütze am Fahrzeugboden befestigbar. Zum Beispiel ist die Vertikalstütze unmittelbar am Fahrzeugboden befestigbar. Denkbar ist, dass das Anbringelement im Bereich des ersten Endes der Vertikalstütze mit der Vertikalstütze verbunden ist. Beispielsweise ist das Anbringelement mit der Vertikalstütze unlösbar verbunden, z.B. verschweißt.

Beispielsweise umfasst die Führungsbahn eine flächig ausgebildete Laufläche. Denkbar ist auch, dass das Gurtgestell eine Rastfläche aufweist. Beispielsweise weist die Führungsbahn die Lauffläche auf. Zum Beispiel weist die Führungsbahn die Rastfläche auf. Beispielsweise sind die Rastfläche und die Lauffläche unterschiedlich räumlich orientiert. Zum Beispiel ist im montierten Zustand des Fahrzeugsitzes zur Verstellung des Rückhalteelements das Ablaufelement über einen Verstellweg des Ablaufelements in vertikaler Richtung sich auf der Lauffläche abstützend entlangbewegbar. Zum Beispiel sind das Ablaufelement und die Führungsbahn derart aufeinander abgestimmt, dass das Ablaufelement nach dem Bewegen entlang der Lauffläche in Richtung der Rastfläche das Ablaufelement in der Nutzposition des Rückhalteelements sich auf der Rastfläche abstützt. Beispielsweise stützt sich das Ablaufelement in der Nutzposition des Rückhalteelements auf der Rastfläche ab. Beispielsweise ist das Ablaufelement mit einer Sicherungskraft gegen ein Zurückbewegen des Ablaufelements von der Rastfläche zur Lauffläche gesichert. Beispielsweise erstreckt sich die Führungsbahn entlang oder parallel zur Längsachse der Vertikalstütze. Zum Beispiel erstreckt sich die Lauffläche entlang oder parallel zur Längsachse der Vertikalstütze. Denkbar ist, dass die Rastfläche sich quer zur Längsachse der Vertikalstütze erstreckt.

Beispielsweise ist das Rückhalteelement durch die Verstellmechanik in einer Bewegung entlang der Längsachse der Vertikalstütze von einer Nutzposition in eine Verstauposition und umgekehrt bewegbar.

Beispielsweise ist das Rückhalteelement im Bereich des zweiten Endes der Vertikalstütze als ein Gurtumlenkelement, z.B. als eine Gurtumlenkrolle, ausgebildet. Denkbar ist jedoch auch, dass das Rückhalteelement als ein Gurtumlenkpunkt oder als ein Gurtankerpunkt vorhanden ist. Beispielsweise ist das Rückhalteelement in Form einer Öse oder einer Öffnung vorhanden. Zum Beispiel ist durch die Öse oder die Öffnung der Gurt des Personenrückhaltesystems durchführbar, sodass die Öse oder die Öffnung eine Führung für den Gurt bildet. Beispielsweise umfasst das Rückhalteelement zwei Gurtumlenk-Ösen oder zwei Gurtumlenkrollen.

Außerdem wird vorgeschlagen, dass das Gurtgestell eine Horizontalstrebe aufweist, wobei die Horizontalstrebe an der Vertikalstütze angeordnet ist, wobei die Horizontalstrebe vom Anbringelement beabstandet vorhanden ist. Beispielsweise ist durch die Horizontalstrebe ein Gurtgestell für eine Fahrzeugsitzbank mit zwei oder mehr Sitzplätzen realisierbar. Beispielsweise ist die Vertikalstütze und/oder die Horizontalstütze als ein Teil der Stützstruktur des Gurtgestells vorhanden.

Zum Beispiel verläuft eine Längsachse der Horizontalstrebe quer zur Längsachse der Vertikalstütze. Denkbar ist, dass die Längsachse der Horizontalstrebe quer zur Fahrtrichtung des Fahrzeugs vorhanden ist. Zum Beispiel ist die Längsachse der Horizontalstrebe senkrecht zur Fahrtrichtung des Fahrzeugs ausgerichtet. Beispielsweise ist die Längsachse der Horizontalstrebe quer zu der Normalen der Ebene des Fahrzeugbodens ausgerichtet.

Beispielsweise ist die Vertikalstütze und/oder die Horizontalstrebe als ein Hohlprofil, z.B. als ein Vierkantrohr, ausgebildet. Im Querschnitt ist das Hohlprofil typischerweise rechteckig oder quadratisch vorhanden, denkbar ist aber auch, dass das Hohlprofil im Querschnitt rund oder elliptisch ausgebildet ist. Ein typisches Längen- und/oder Breitenmaß bzw. Seitenmaß des Querschnitts des Hohlprofils beträgt ca. 20 bis 40 Millimeter. Denkbar ist auch, dass das Hohlprofil als ein Mehrfachhohlprofil vorhanden ist.

Auch wird vorgeschlagen, dass das Ablaufelement ein drehbar abrollendes Rad umfasst. Zum Beispiel ist das Ablaufelement als ein Rad ausgebildet. Beispielsweise ist das Ablaufelement durch zwei drehbare Räder an einer Achse ausgebildet. Hierdurch ist eine vergleichsweise einfache Bewegungsmechanik realisiert.

Zum Beispiel weist das Ablaufelement eine Achse auf, an welcher voneinander beabstandet zwei Räder vorhanden sind. Denkbar ist, dass die Achse des Ablaufelements quer zur Längsachse der Vertikalstütze ausgerichtet vorhanden ist.

Weiter wird vorgeschlagen, dass die Verstellmechanik eine Schienenanordnung aufweist. Hierdurch ist eine Bewegungsführung des Rückhalteelements bei einer Bewegung des Rückhalteelements aus der Nutzposition in die Verstauposition vergleichsweise einfach gewährleistet.

Beispielsweise weist die Schienenanordnung zwei Bewegungsführungselemente auf. Z.B. weist jedes Bewegungsführungselement eine Grundschiene und eine Bewegungsschiene auf. Beispielsweise sind die Grundschiene und die Bewegungsschiene zueinander relativbeweglich vorhanden. Vorstellbar ist, dass die Bewegungsschiene relativ zur Grundschiene linearbeweglich vorhanden ist. Beispielsweise ist die Bewegungsschiene entlang der oder parallel zur Längsachse der Vertikalstütze beweglich vorhanden.

Denkbar ist, dass die Grundschiene positionsfest zur Vertikalstützte und/oder positionsfest zum Profil vorhanden ist. Beispielsweise ist die Bewegungsschiene relativ zur Vertikalstütze und/oder relativ zum Profil beweglich vorhanden. Vorstellbar ist, dass die Bewegungsschiene positionsfest zum Rückhaltelement ausgebildet ist.

Außerdem wird vorgeschlagen, dass die Verstellmechanik ein Gestell aufweist, wobei am Gestell das Rückhalteelement angeordnet ist, wobei das Gestell mit dem Profil verbunden ist. Hierdurch ist eine vergleichsweise stabile Anordnung gewährleistet, um insbesondere die gesetzlichen Sicherheitsanforderungen zu erfüllen.

Beispielsweise weist das Gestell ein Griffelement auf, um das Gestell aus der Verstauposition in die Nutzposition zu bewegen. Zum Beispiel ist das Gestell über die Schienenanordnung mit dem Profil verbunden. Beispielsweise ist das Gestell mit der Bewegungsschiene eines Bewegungsführungselements verbunden. Z.B. ist das Gestell positionsfest mit der Bewegungsschiene eines Bewegungsführungselements verbunden. Vorstellbar ist, dass das Gestell plattenförmig vorhanden ist. Denkbar ist, dass das Gestell eine Platte umfasst oder als eine Platte ausgebildet ist. Zum Beispiel ist an der Platte ein Rückhalteelement befestigt. Denkbar ist, dass an der Platte zwei Rückhalteelemente befestigt sind. Beispielsweise ist das Griffelement durch eine Ausnehmung in der Platte realisiert. Beispielsweise ist das Griffelement Teil der Platte.

Ebenfalls wird vorgeschlagen, dass eine Hebelanordnung mit einem Betätigungsabschnitt für eine manuelle Betätigung der Hebelanordnung von außen vorgesehen ist, wobei durch eine Betätigung der Hebelanordnung die Blockierung des Rückhalteelements aufhebbar ist. Hierdurch ist eine vergleichsweise einfache Bedienung der Verstellmechanik realisiert.

Beispielsweise weist die Verstellmechanik die Hebelanordnung auf. Denkbar ist, dass die Hebelanordnung über die Schienenanordnung mit dem Profil verbunden ist. Zum Beispiel ist durch manuelle Betätigung der Hebelanordnung von außen das Ablaufelement von der Rastfläche wegbewegbar. Beispielsweise ist durch ein Betätigen der Hebelanordnung das Ablaufelement gegen eine Sicherungskraft und/oder gegen eine Federkraft von der Rastfläche zur Lauffläche versetzbar. Vorstellbar ist, dass durch eine Schwenkbewegung der Hebelanordnung eine lineare Bewegung des Ablaufelements realisierbar ist. Denkbar ist, dass durch eine Schwenkbewegung der Hebelanordnung eine horizontale Bewegung des Ablaufelements realisierbar ist. Z.B. ist durch eine Schwenkbewegung der Hebelanordnung eine Bewegung des Ablaufelements entlang der Rastfläche realisierbar. Z.B. ist durch eine Bewegung der Hebelanordnung die Blockierung des Rückhalteelements aufhebbar. Beispielsweise ist durch eine Schwenkbewegung der Hebelanordnung die Blockierung des Rückhalteelements aufhebbar.

Weiter wird vorgeschlagen, dass die Hebelanordnung einen Hebel aufweist, wobei der Hebel schwenkbeweglich vorhanden ist. Hierdurch ist eine vergleichsweise einfache und/oder robuste Mechanik realisiert.

Beispielsweise ist der Hebel schwenkbeweglich am Gestell gelagert. Zum Beispiel ist der Hebel relativbeweglich zum Profil vorhanden. Zum Beispiel weist das Ablaufelement eine Achse auf, an welcher voneinander beabstandet zwei Räder vorhanden sind. Denkbar ist, dass die Achse des Ablaufelements an der Hebelanordnung gelagert ist. Z.B. ist die Achse des Ablaufelements an der Hebelanordnung drehbar gelagert. Z.B. sind die Räder an der Achse drehbar gelagert. Beispielsweise ist ein Ablaufelement am Hebel angeordnet. Zum Beispiel ist die Achse am Hebel angeordnet.

Beispielsweise weist der Hebel ein Bedienelement auf, welches relativ zum Griffelement beweglich vorhanden ist. Denkbar ist, dass das Bedienelement und/oder das Griffelement als eine Strebe oder ein Rohr ausgebildet ist. Zum Beispiel ist eine Längsachse des Bedienelements und/oder eine Längsachse des Griffelements horizontal ausgerichtet vorhanden. Denkbar ist, dass die Achse des Ablaufelement, die Längsachse des Griffelements und/oder die Längsachse des Bedienelements parallel zueinander ausgerichtet vorhanden sind.

Beispielsweise ist das Bedienelement durch eine Schwenkbewegung des Hebels auf das Griffelement zu bewegbar oder vom Griffelement wegbewegbar vorhanden.

Beispielsweise ist eine Schwenkachse des Hebels quer zu einer Bewegungsrichtung der,Schienenanordnung ausgerichtet. Beispielsweise ist die Schwenkachse des Hebels quer Längsachse der Vertikalstütze ausgerichtet. Zum Beispiel ist der Hebel im Bereich der Schwenkachse mit der Schienenanordnung verbunden. Vorstellbar ist, dass der Hebel im Bereich der Schwenkachse mit der Bewegungsschiene verbunden ist.

Zum Beispiel weist die Hebelanordnung ein Federelement auf. Denkbar ist, dass das Federelement als eine Spiralfeder oder als eine Schenkelfeder ausgebildet ist. Beispielsweise ist das Federelement derart an der Hebelanordnung angeordnet, dass das Federelement den Hebel mit einer Federkraft beaufschlagt.

Denkbar ist, dass das Federelement den Hebel mit der Federkraft in Richtung eines Grundzustands des Hebels drängt.

Beispielsweise stellt das Federelement die Sicherungskraft bereit. Denkbar ist auch, dass eine Federkraft des Federelements eine Komponente der Sicherungskraft bildet. Vorstellbar ist weiterhin, dass die Schwerkraft und/oder die Reibung des Ablaufelements mit der Rastfläche eine Komponente der Sicherungskraft bildet.

Auch wird vorgeschlagen, dass ein erstes Ende des Hebels der Hebelanordnung mit einem Bedienhebel der Schienenanordnung verbunden ist. Hierdurch ist ein vergleichsweise einfaches Lösen einer Verrastung der Schienenanordnung realisiert.

Zum Beispiel greift der Hebel mit dem ersten Ende des Hebels in einem Funktionszustand am Bedienhebel der Schienenanordnung an. Beispielsweise greift der Hebel mit dem ersten Ende des Hebels in einem Funktionszustand unmittelbar am Bedienhebel der Schienenanordnung an. Denkbar ist, dass im Grundzustand des Hebels der Hebel vom Bedienhebel der Schienenanordnung beabstandet vorhanden ist. Vorstellbar ist, dass im Grundzustand des Hebels das erste Ende des Hebels vom Bedienhebel beabstandet vorhanden sind. Denkbar ist, dass der Bedienhebel im Bereich des ersten Endes des Hebels am Hebel der Hebelanordnung beweglich gelagert ist. Vorstellbar ist auch, dass der Bedienhebel im Bereich des ersten Endes des Hebels fest mit dem Hebel der Hebelanordnung verbunden ist. Beispielsweise ist der Bedienhebel am Hebel der Hebelanordnung festgelegt. Denkbar ist, dass an einem zweiten Ende des Hebels der Hebelanordnung das Bedienelement vorhanden ist.

Beispielsweise weist die Schienenanordnung eine Rasteinheit auf. Denkbar ist, dass die Rasteinheit den Bedienhebel aufweist. Zum Beispiel ist die Rasteinheit dazu ausgebildet, die Bewegungsschiene in einer Position relativ zur Grundschiene mit der Grundschiene zu verrasten. Beispielsweise ist die Bewegungsschiene in mehreren verschiedenen Positionen relativ zur Grundschiene durch die Rasteinheit mit der Grundschiene verrastbar. Denkbar ist, dass die Rasteinheit einen Bolzen aufweist, welcher an der Grundschiene und der Bewegungsschiene angreift, sodass die Bewegungsschiene relativ zur Grundschiene durch den Bolzen in einer Position festlegbar ist. Beispielsweise ist der Bolzen an der Bewegungsschiene beweglich gelagert. Denkbar ist, dass die Grundschiene eine Aufnahme oder mehrere Aufnahmen aufweist, in welche der Bolzen eingreifen kann, um die Bewegungsschiene relativ zur Grundschiene in einer Position festzulegen.

Zum Beispiel ist der Bedienhebel mit dem Bolzen verbunden. Beispielsweise ist durch die Bewegung des Bedienhebels eine Bewegung des Bolzens realisiert. Hierdurch ist ein Lösen der Verrastung der Schienenanordnung durch eine Schwenkbewegung des Hebels realisierbar.

Zum Beispiel weist die Schienenanordnung oder die Rasteinheit ein Federorgan auf. Denkbar ist, dass das Federorgan als eine Spiralfeder oder als eine Schenkelfeder ausgebildet ist. Beispielsweise ist das Federorgan derart an der Schienenanordnung oder der Rasteinheit angeordnet, dass das Federorgan den Bedienhebel der Federkraft mit einer Federkraft beaufschlagt. Denkbar ist, dass das Federorgan den Bedienhebel mit der Federkraft in Richtung eines Sicherungszustands des Bedienhebels drängt. Beispielsweise drängt das Federorgan den Bolzen mit einer Federkraft des Federorgans in Richtung Grundschiene.

Außerdem wird vorgeschlagen, dass der Hebel der Hebelanordnung in der Nutzposition des Rückhalteelements sich in einem Grundzustand befindet, wobei im Grundzustand der Bedienhebel der Schienenanordnung sich in einem Sicherungszustand befindet, sodass die Schienenanordnung verrastet ist. Hierdurch ist das Rückhalteelement in der Nutzposition gesichert.'

Weiter wird vorgeschlagen, dass der Hebel der Hebelanordnung aus dem Grundzustand in einen Funktionszustand bewegbar ist, sodass der Bedienhebel der Schienenanordnung betätigt ist und eine Verrastung der Schienenanordnung im Funktionszustand gelöst ist. Hierdurch ist eine Bewegung des Rückhalteelements aus der Nutzposition in die Verstauposition realisierbar.

Beispielsweise steht das Ablaufelement im Funktionszustand des Hebels der Hebelanordnung an der Führungsbahn an, sodass die Verrastung der Schienenanordnung im Funktionszustand des Hebels gelöst ist. Denkbar ist, dass die Verrastung der Schienenanordnung im Funktionszustand des Hebels dauerhaft gelöst ist. Vorstellbar ist, dass der Bedienhebel der Schienenanordnung im Funktionszustand des Hebels dauerhaft betätigt ist. Beispielsweise steht das erste Ende des Hebels der Hebelanordnung im Funktionszustand am Bedienhebel der Schienenanordnung an. Denkbar ist, dass das erste Ende des Hebels der Hebelanordnung im Funktionszustand am Bedienhebel der Schienenanordnung unmittelbar ansteht. Beispielsweise ist der Hebel der Hebelanordnung aus dem Grundzustand entgegen der Federkraft des Federelements in den Funktionszustand bewegbar.

Denkbar ist, dass in der Verstauposition des Rückhalteelements der Hebel in den Grundzustand zurückbewegbar ist, sodass eine Verrastung der Schienenanordnung realisiert ist. Beispielsweise weist die Führungsbahn des Profils in einer Verstauposition eine Ausnehmung auf. Vorstellbar ist, dass in einer Verstauposition des Rückhalteelements das Ablaufelement in die Ausnehmung eingreift, sodass der Hebel in den Grundzustand zurückbewegt ist.

Auch wird vorgeschlagen, dass die Verstellmechanik eine Kulissenführung zur Bewegungsführung des Ablaufelements aufweist, um die Blockierung des Rückhalteelements zu lösen. Beispielsweise dient die Kulissenführung zur Bewegungsführung der Hebelanordnung. Hierdurch ist eine Funktionssicherheit vergleichsweise erhöht.

Beispielsweise weist das Profil eine Aussparung auf. Denkbar ist, dass die Aussparung des Profils schlitzartig ausgebildet ist. Denkbar ist, dass die Aussparung des Profils als ein Schlitz ausgebildet ist. Vorstellbar ist weiter, dass der Hebel der Hebelanordnung im Funktionszustand am Bereich des ersten Endes mit einem Führungsabschnitt in die Aussparung eingreift. Beispielsweise bildet die Aussparung die Kulissenführung.

Beispielsweise ist das Profil als eine Platte ausgebildet. Denkbar ist, dass das Profil mit der Vertikalstütze verbunden ist. Zum Beispiel ist das Profil unlösbar mit der Vertikalstütze verbunden. Beispielsweise ist das Profil mit allen Vertikalstützen verbunden. Beispielsweise ist das Profil zwischen den Vertikalstützen angeordnet. Vorstellbar ist, dass das Profil mit der Vertikalstütze verschweißt, vernietet und/oder verschraubt ist.

Beispielsweise weist die Verstellmechanik ein Anschlagelement auf. Denkbar ist, dass das Profil das Anschlagelement aufweist. Vorstellbar ist, dass in einer Verstauposition das Ablaufelement und/oder der Hebel der Hebelanordnung am Anschlagelement ansteht. Denkbar ist, dass die Verstellmechanik zwei Anschlagelemente aufweist. Beispielsweise steht das Ablaufelement in einer Verstauposition an einem ersten Anschlagelement an. Denkbar ist, dass die Hebelanordnung in der Verstauposition an einem zweiten Anschlagelement anstehen. Beispielsweise weist die Kulissenführung das zweite Anschlagelement auf. Vorstellbar ist auch, dass die Schienenanordnung ein Anschlagelement aufweist. Beispielsweise weist die Grundschiene das Anschlagelement auf und die Bewegungsschiene steht in der Verstauposition am Anschlagelement an. Durch das Anschlagelement ist eine Bewegung des Rückhalteelements aus der Nutzposition in die Verstauposition begrenzt.

Ebenfalls wird ein Fahrzeugsitz mit einem Gurtgestell nach einer der vorangegangen genannten Ausführungsformen vorgeschlagen.

Beispielsweise ist der Fahrzeugsitz als eine Fahrzeugsitzbank ausgebildet.

Außerdem wird ein Fahrzeug mit einem Gurtgestell nach einer der vorangegangen genannten Ausführungsformen oder mit einem Fahrzeugsitz nach einer der vorangegangen genannten Ausführungsformen vorgeschlagen.

### Figurenbeschreibung

Weitere Merkmale und Vorteile der Erfindung sind anhand schematisch gezeigter Ausführungsbeispiele näher erläutert. Im Einzelnen zeigt:
- Figur 1: ein Gurtgestell in einer perspektivischen Ansicht von seitlich vorne unten,
- Figur 2: eine vergrößerte Detailansicht einer Verstellmechanik des Gurtgestells gemäß Figur 1, wobei Elemente des Gurtgestells und der Verstellmechanik zum besseren Verständnis unsichtbar gehalten sind,
- Figur 3: die Detailansicht gemäß Figur 2 vergrößert, wobei noch mehr Elemente der Verstellmechanik und des Gurtgestells ausgeblendet sind und
- Figuren 4 bis 9: eine Frontansicht auf einen Ausschnitt eines Gurtgestells mit angeordneter Verstellmechanik, wobei in den Figuren 4 bis 9 ein Bewegungsablauf der Verstellmechanik dargestellt ist.

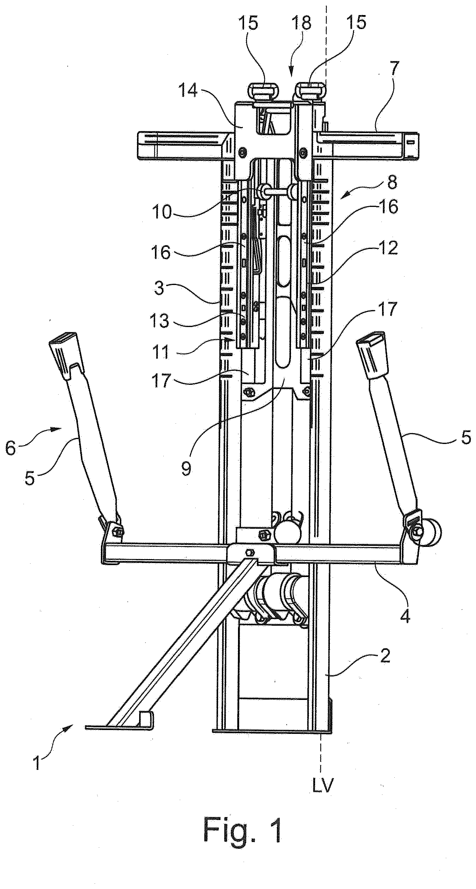

Figur 1 zeigt ein Gurtgestell 1 für einen Fahrzeugsitz (nicht abgebildet). Das Gurtgestell 1 weist eine erste Vertikalstütze 2 und eine zweite Vertikalstütze 3 auf. Denkbar ist, dass sich eine Vertikalstütze 2, 3 entlang einer Längsachse LV erstreckt.

Denkbar ist, dass die Längsachse LV der Vertikalstütze 2, 3 im angeordneten Zustand des Gurtgestells 1 vertikal ausgerichtet vorhanden ist. Weiter weist das Gurtgestell 1 eine Querstrebe 4 auf. Beispielsweise sind an der Querstrebe 4, Gurtschlösser 5 eines Personenrückhaltesystems 6 befestigt. Beispielsweise weist das Gurtgestell 1 eine zweite Querstrebe 7 auf. Z.B. ist an der zweiten Querstrebe 7 eine Kopfstütze (nicht gezeigt) anordenbar.

Auch weist das Gurtgestell 1 eine Verstellmechanik 8 auf. Beispielsweise weist die Verstellmechanik 8 ein Profil 9 und ein Ablaufelement in Form einer Rolle 10 auf. Vorstellbar ist auch, dass die Verstellmechanik 8 eine Schienenanordnung 11 aufweist. Beispielsweise umfasst die Schienenanordnung 11 ein erstes Bewegungsführungselement 12 und ein zweites Bewegungsführungselement 13 auf. Vorstellbar ist weiter, dass die Verstellmechanik 8 ein Gestell 14 aufweist. Denkbar ist, dass am Gestell 14 ein Rückhalteelement 15 z.B. in Form eines Gurtumlenkers angeordnet ist. Beispielsweise weist ein Bewegungsführungselement 12, 13 eine Bewegungsschiene 16 und eine Grundschiene 17 auf. Vorstellbar ist weiter, dass die Schienenanordnung 11 einen Bedienhebel 22 aufweist.

Beispielsweise weist das Gurtgestell 1 eine Hebelanordnung 18 auf. Denkbar ist, dass die Hebelanordnung 18 einen Betätigungsabschnitt 20 aufweist. Vorstellbar ist weiter, dass am Gestell 14 ein Griffelement 21 vorhanden ist. Beispielsweise ist der Betätigungsabschnitt 20 an einem Hebel 19 angeordnet. Beispielsweise ist der Hebel 19 mit einem ersten Ende 23 mit dem Bedienhebel 22 der Schienenanordnung 11 gekoppelt.

Vorstellbar ist weiter, dass die Verstellmechanik 8, insbesondere das Profil 9, eine Führungsbahn 24 aufweist. Denkbar ist, dass mittels der Führungsbahn 24 die Rolle 10 am Profil beweglich geführt ist. Denkbar ist, dass die Führungsbahn 24 eine Lauffläche 25 und eine Rastfläche 26 aufweist. Beispielsweise ist die Lauffläche 25 sich in der Vertikalen erstreckend vorhanden. Beispielsweise ist die Rastfläche 26 sich in der Horizontalen erstreckend vorhanden. Denkbar ist, dass die Lauffläche 25 und die Rastfläche 26 quer zueinander ausgerichtet vorhanden sind, z.B. senkrecht zueinander.

Beispielsweise weist das Profil 9 eine Kulissenführung 27 auf. Denkbar ist, dass der Hebel 19 mit einem Führungsabschnitt 28 an der Kulissenführung 27 angreift. Zum Beispiel ist, dass der Hebel 19 durch die Kulissenführung 27 zumindest abschnittsweise geführt vorhanden ist. Vorstellbar ist, dass der Führungsabschnitt 28 am ersten Ende 23 des Hebels 19 ausgebildet ist. Beispielsweise ist der Führungsabschnitt 28 vom Hebel 19 abstehend ausgebildet.

Beispielsweise ist der Hebel 19 schwenkbeweglich am Gestell 14 gelagert. Beispielsweise ist der Hebel 19 über eine Schwenkachse S schwenkbeweglich am Gestell 14 gelagert. Beispielsweise erstreckt sich der Hebel 19 entlang seiner Längsachse vom Führungsabschnitt 28 bis zum Betätigungsabschnitt 20.

Auch vorstellbar ist, dass das Profil 9 ein Anschlagelement 29 aufweist, an welchem der Hebel 19 mit seinem ersten Ende 23, insbesondere mit dem Führungsabschnitt 28 in einer Verstauposition des Rückhalteelements 15 oder in einer Verstauposition der Verstellmechanik 8 ansteht.

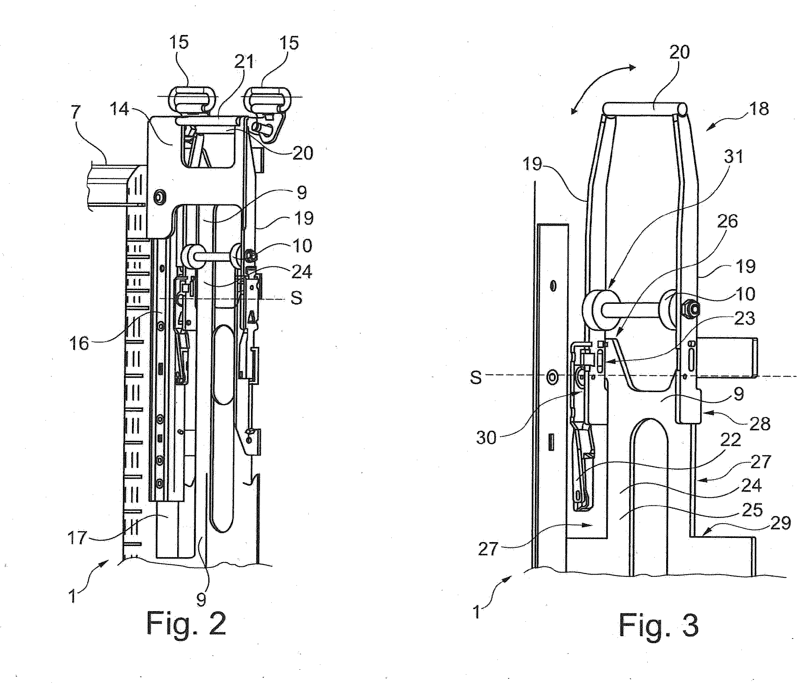

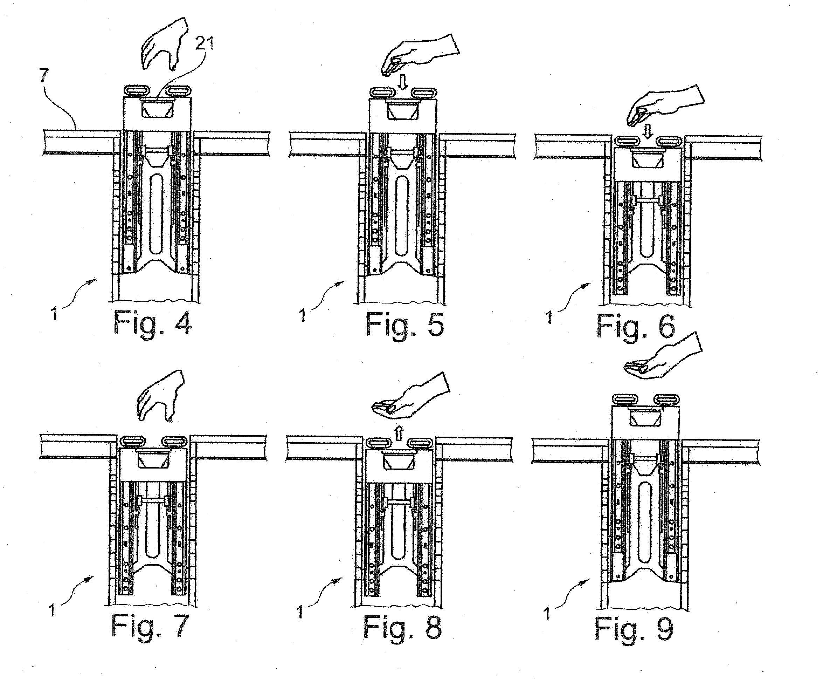

Vorstellbar ist.auch, dass das Gurtgestell 1 ein Federelement 30 aufweist. Beispielsweise ist das Federelement 30 als eine Spiralfeder ausgebildet. Vorstellbar ist, dass das Federelement 30 derart vorhanden ist, dass der Hebel 19 mit einer Federkraft des Federelements 30 beaufschlagt ist, sodass der Hebel 19 durch die Federkraft in einen Grundzustand, beispielsweise gemäß Figuren 3, 9 (dort schematisch angedeutet), gedrängt ist. Beispielsweise drängt das Federelement 30 den Hebel 19 zu einer Schwenkbewegung um die Schwenkachse S.

Beispielsweise steht die Rolle 10 im Grundzustand des Hebels 19 oder in der Nutzposition des Rückhalteelements 15 mit einer Rollfläche 31 der Rolle 10 an der Rastfläche 26 an, z.B. auf. Beispielsweise steht die Rolle 10 im Grundzustand des Hebels 19 oder in der Nutzposition des Rückhalteelements 15 mit einer Rollfläche 31 der Rolle 10 an der Rastfläche 26 unmittelbar an.

In den Figuren 4 bis 9 ist ein Bewegungsablauf der Verstellmechanik 8 des Gurtgestells 1 dargestellt. In Figur 4 ist das Rückhalteelement 15 und/oder die Verstellmechanik 8 in einer Nutzposition. Der Hebel 19 befindet sich im Grundzustand und die Rolle 10 steht mit ihrer Rollfläche 31 an der Rastfläche 26 auf. Um nun die Verstellmechanik 8 in eine Verstauposition gemäß Figur 6 zu bewegen ergreift ein Nutzer den Betätigungsabschnitt 20 der Hebelanordnung 18 und schwenkt den Hebel 19 um die Schwenkachse S in Richtung Griffelement 21. Hierdurch rollt die Rolle 10 entlang der Rastfläche 26 in Richtung Lauffläche 25 (aus der Bildebene heraus), wodurch eine Verriegelung der Hebelanordnung 18 am Profil 9 gelöst ist.

Gleichzeitig kann der Hebel 10 mit dem Bedienhebel 22 koppeln, wodurch eine Verriegelung der Bewegungsführungselemente 12, 13 gelöst werden kann. Nach dem Lösen der Verriegelung kann der Nutzer die Verstellmechanik 8 und damit das Rückhalteelement 15 in Richtung Verstauposition (nach unten) bewegen. Ggf. ist dies vergleichsweise einfach durch die Gewichtskraft unterstützt. Hierbei rollt die Rolle 10 entlang der Lauffläche 25. Gleichzeitig greift der Hebel 19 mit dem Führungsabschnitt 28 an der Kulissenführung 27 an, wodurch ein Verkanten verhindert ist.

In der Verstauposition gemäß Figur 6 steht beispielsweise der Führungsabschnitt 28 am Anschlagelement 29 an, wodurch ein Weiterbewegen der Verstellmechanik 8 begrenzt ist. Vorstellbar ist auch, dass in dieser Position der Hebel 19 in den Grundzustand zurückbewegbar ist, z.B. mittels der Federkraft des Federelements 30, wodurch eine Verriegelung der Bewegungsführungselemente 12, 13 in der Verstauposition realisierbar ist. Denkbar ist auch, dass in der Verstauposition aufgrund des Anstehens der Rolle 10 an der Lauffläche 25 ein Schwenken des Hebels 19 um die Schwenkachse in den Grundzustand verhindert ist.

Eine Bewegung der Verstellmechanik aus der Verstauposition gemäß Figuren 6, 7 in die Nutzposition gemäß Figuren 4, 9 erfolgt durch vergleichsweise einfaches Bewegen der Mechanik in vertikaler Richtung in Richtung Nutzposition oder ggf. durch zunächst ein Verschwenken des Hebels 19 analog.

**Bezugszeichenliste**

| | | | |
|---|---|---|---|
| 1 | Gurtgestell | 17 | Grundschiene |
| 2 | Vertikalstütze | 18 | Hebelanordnung |
| 3 | Vertikalstütze | 19 | Hebel |
| 4 | Querstrebe | 20 | Betätigungsabschnitt |
| 5 | Gurtschloss | 21 | Griffelement |
| 6 | Personenrückhaltesystem | 22 | Bedienhebel |
| 7 | Querstrebe | 23 | Ende |
| 8 | Verstellmechanik | 24 | Führungsbahn |
| 9 | Profil | 25 | Lauffläche |
| 10 | Rolle | 26 | Rastfläche |
| 11 | Schienenanordnung | 27 | Kulissenführung |
| 12 | Bewegungsführungselement | 28 | Führungsabschnitt |
| 13 | Bewegungsführungselement | 29 | Anschlagelement |
| 14 | Gestell | 30 | Federelement |
| 15 | Rückhalteelement | 31 | Rollfläche |
| 16 | Bewegungsschiene | | |

## Patentansprüche

1. Gurtgestell (1) für einen Fahrzeugsitz, wobei im verbauten Zustand des Gurtgestells (1) im Fahrzeugsitz das Gurtgestell (1) eine mechanisch tragende Stützstruktur des Fahrzeugsitzes bildet, wobei das Gurtgestell (1) ein Rückhalteelement (5, 15) aufweist, wobei das Rückhalteelement (5, 15) dazu ausgebildet ist, einen Sicherungsgurt eines Personenrückhaltesystems (6) anzuordnen, wobei das Gurtgestell (1) eine Vertikalstütze (2, 3) aufweist, **dadurch gekennzeichnet, dass** das Gurtgestell (1) eine Verstellmechanik (8) aufweist, um das Rückhalteelement (15) des Personenrückhaltesystems (6) relativ zur Vertikalstütze (2, 3) zu verstellen, wobei das Rückhalteelement (15) mit der Verstellmechanik (8) derart zusammenwirkt, dass das Rückhalteelement (15) durch die Verstellmechanik (8) in einer Bewegung von einer Nutzposition in eine Verstauposition und umgekehrt bewegbar ist, wobei die Verstellmechanik (8) ein Profil (9) aufweist, das relativ zur Vertikalstütze (2, 3) positionsfest vorhanden ist, wobei die Verstellmechanik (8) ein Ablaufelement (10) aufweist, wobei das Profil (9) eine Führungsbahn für das Ablaufelement (10) aufweist, wobei das Ablaufelement (10) mit dem Rückhalteelement (15) gekoppelt ist, wobei in der Nutzposition des Rückhalteelements (15) eine Bewegung des Rückhalteelements (15) in vertikaler Richtung blockiert ist, wobei die Verstellmechanik (8) derart vorhanden ist, dass das Ablaufelement (10) in der Nutzposition des Rückhalteelements (15) in einem ersten Bewegungsabschnitt in horizontaler Richtung quer zur Längsachse der Vertikalstütze (2, 3) bewegbar ist, um die Blockierung des Rückhalteelements (15) in vertikaler Richtung zu lösen, wobei in einem zweiten Bewegungsabschnitt des Ablaufelements (10) das Ablaufelement (10) für eine Verstellung des Rückhalteelements (15) aus der Nutzposition in eine Verstauposition in vertikaler Richtung entlang einer Längsachse der Vertikalstütze (2, 3) an der Führungsbahn bewegbar ist.

2. Gurtgestell (1) nach Anspruch 1, **dadurch gekennzeichnet, dass** das Ablaufelement (10) ein drehbar abrollendes Rad umfasst.

3. Gurtgestell (1) nach einem der vorhergehenden Ansprüche, **dadurch gekennzeichnet, dass** die Verstellmechanik (8) eine Schienenanordnung (11) aufweist.

4. Gurtgestell (1) nach einem der vorhergehenden Ansprüche, **dadurch gekennzeichnet, dass** die Verstellmechanik (8) ein Gestell (14) aufweist, wobei am Gestell (14) das Rückhalteelement (15) angeordnet ist, wobei das Gestell (14) mit dem Profil (9) verbunden ist.

5. Gurtgestell (1) nach einem der vorhergehenden Ansprüche, **dadurch gekennzeichnet, dass** eine Hebelanordnung (18) mit einem Betätigungsabschnitt (20) für eine manuelle Betätigung der Hebelanordnung (18) von außen vorgesehen ist, wobei durch eine Betätigung der Hebelanordnung (18) die Blockierung des Rückhalteelements (15) aufhebbar ist.

6. Gurtgestell (1) nach dem vorhergehenden Anspruch 5, **dadurch gekennzeichnet, dass** die Hebelanordnung (18) einen Hebel (19) aufweist, wobei der Hebel (19) schwenkbeweglich vorhanden ist.

7. Gurtgestell (1) nach einem der vorhergehenden Ansprüche 5 oder 6, **dadurch gekennzeichnet, dass** ein erstes Ende (23) des Hebels (19) der Hebelanordnung (18) mit einem Bedienhebel (22) der Schienenanordnung (11) verbunden ist.

8. Gurtgestell (1) nach einem der vorhergehenden Ansprüche 6 oder 7, **dadurch gekennzeichnet, dass** der Hebel (19) in der Nutzposition des Rückhalteelements (15) sich in einem Grundzustand befindet, wobei im Grundzustand der Bedienhebel (22) der Schienenanordnung (11) sich in einem Sicherungszustand befindet, sodass die Schienenanordnung (11) verrastet ist.

9. Gurtgestell (1) nach einem der vorhergehenden Ansprüche 6 bis 8, **dadurch gekennzeichnet, dass** der Hebel (19) aus dem Grundzustand in einen Funktionszustand bewegbar ist, sodass der Bedienhebel der Schienenanordnung (11) betätigt ist und eine Verrastung der Schienenanordnung (11) im Funktionszustand gelöst ist.

10. Gurtgestell (1) nach einem der vorhergehenden Ansprüche, **dadurch gekennzeichnet, dass** die Verstellmechanik (8) eine Kulissenführung zur Bewegungsführung des Ablaufelements (10) aufweist, um die Blockierung des Rückhalteelements (15) zu lösen.

11. Fahrzeugsitz mit einem Gurtgestell (1) nach einem der vorangegangenen Ansprüche.

12. Fahrzeug mit einem Gurtgestell (1) nach einem der vorangegangenen Ansprüche 1 bis 10 oder mit einem Fahrzeugsitz nach dem vorangegangenen Anspruch 11.
